# EUROPÄISCHE PATENTSCHRIFT

(11) **EP 1 298 342 B1**
(45) Veröffentlichungstag und Bekanntmachung des Hinweises auf die Patenterteilung: **14.02.2007**
(21) Anmeldenummer: 02020461.6
(22) Anmeldetag: 12.09.2002
(51) Int. Cl.: F16D 65/12

(54) **Innenbelüftete Bremsscheibe mit Durchgängen und hergestellt aus faserverstärkten keramischen Verbundwerkstoffen**
Internally ventilated brake disc with opening passages and made of fiber reinforced ceramic composite material
Disque de frein à ventilation interne avec trous traversants et fabriqué en matériau céramique composite

(30) Priorität: 21.09.2001 DE 10146573
(43) Veröffentlichungstag der Anmeldung: 02.04.2003
(73) Patentinhaber: AUDI AG, 85045 Ingolstadt (DE)
(72) Erfinder: Rothmair, Xaver, 86368 Gersthofen (DE); Swozil, Ado, 86707 Kühlenthal (DE); Winkelmann, Peter, 86672 Thierhaupten (DE); Zimmermann-Chopin, Rainer, Dr., 86679 Ellgau (DE)
(74) Vertreter: Deckers, Hellmuth Alexander

(56) Entgegenhaltungen:
- EP-A- 0 717 214
- DE-A- 4 332 693
- DE-A- 19 822 579
- DE-C- 19 711 829

## Beschreibung

Die Erfindung bezieht sich auf innenbelüftete Bremsscheiben aus faserverstärkten keramischen Verbundwerkstoffen mit Durchgängen, wie im Oberbegriff von Patentanspruch 1 angegeben. Ein solche Bremsseibe ist aus DE-A-198 22 579 bekannt.

Insbesondere betrifft die Erfindung Bremsscheiben aus mit Kohlenstoffasern verstärkten Keramiken und C/SiC-Werkstoffen (d. i. mit Kohlenstoffasern verstärkten Keramiken, deren Matrix Siliciumcarbid, Silicium und Kohlenstoff enthält), deren innenliegende Luftkanäle durch Querrippen voneinander getrennt sind und die zumindest innerhalb der Querrippen Durchgänge aufweisen.

Innenbelüftete Bremsscheiben mit Durchgängen sind bereits bekannt, insbesondere für Guß-Bremsscheiben aus metallischen Werkstoffen. Beispielsweise werden in DE-A 22 57 176 innenbelüftete Bremsscheiben beschrieben, die zwei parallel zueinander angeordnete und durch Querrippen verbundene Scheiben umfassen, deren Bremsflächen eine Vielzahl von Löchern oder Ausnehmungen aufweisen. Diese Ausnehmungen verlaufen hierbei in der Nähe oder unmittelbaren Nähe der Querrippen. Die Querrippen weisen dabei unter anderem Ausformungen auf, die die Öffnungen höchstens teilweise umschließen. Nachteilig ist hierbei, daß sich die für Grauguß beschriebene Konstruktion, aufgrund des mitunter filigranen Rippenverlaufes, nur schwer in faserverstärkter Keramik fertigen läßt. Durch die im Gegensatz zu Metallen in den faserverstärkten Keramiken vorherrschende Anisotropie der Werkstoffeigenschaften, wie zum Beispiel der Festigkeiten und der im allgemeinen geringeren Werkstoffzähigkeit, ergibt sich für die aus keramischen Verbundwerkstoffen aufgebauten Bremsscheiben mitunter eine deutlich vom Graugußäquivalent verschiedene Bruchmechanik. Es ist daher zweckmäßig die für Metalle bewährten Designs, so abzuändern, daß sie den besonderen Eigenschaften der faserverstärkten Verbundwerkstoffe Rechnung tragen.

Da sich das Werkstoffversagen im Überlastbereich bei keramischen Verbundwerkstoffen im Gegensatz zu metallischen Werkstoffen nicht schon sehr früh durch Verziehen des Bauteils oder unterkritisches Rißwachstum deutlich bemerkbar macht, ist es erstrebenswert, sehr hohe Festigkeiten, insbesondere gegenüber der rotierenden Belastung der Bremsscheibe zu realisieren. Ein Maß für diese Festigkeit ist die Berstdrehzahl, diejenige Rotationsgeschwindigkeit, bei welcher die Scheiben zerbrechen.

Aus DE-A 43 32 693 ist bekannt, daß für innenbelüftete Bremsscheiben zwischen den Querrippen, also innerhalb der zur Innenbelüftung dienenden Hohlräume im Inneren der Scheibe, Wandverstärkungen in Form von Halbrippen oder Zapfen vorgesehen werden, durch die die Bohrungen verlaufen. Hierdurch wird der Bereich dieser Durchgänge mechanisch verstärkt. Auch bei dieser Ausführung ist die Übertragung auf faserverstärkte Keramiken schwierig. Die Zapfen und Halbrippen im Bereich der Ausnehmungen oder Durchgänge lassen sich aus faserverstärkten keramischen Verbundwerkstoffen nur mit erheblichem Aufwand herstellen. Gerade für kurzfaserverstärktes Material, das über Pressprozesse geformt wird, ist eine gleichmäßige Faserverteilung und die gewünschte Faservorzugsorientierung in den feinen Zapfen und Halbrippen nicht mehr möglich.

Die Aufgabe der Erfindung ist es, eine Konstruktion für eine Bremsscheibe mit verbesserter Kühlung aus faserverstärkten keramischen Werkstoffen mit Durchgängen anzugeben, die die durch Durchgänge hervorgerufene Festigkeitsbeeinträchtigung, insbesondere bei der Berstfestigkeit, der Bremsscheibe durch ein keramikgerechtes Design vermeidet oder zumindest verringert, sowie die Fertigungsnachteile des Standes der Technik für faserverstärkte keramische Verbundwerkstoffe zu vermeiden.

Die Aufgabe wird erfindungsgemäß dadurch gelöst, daß in einer mit Durchgängen versehenen Bremsscheibe aus faserverstärkten keramischen Werkstoffen bei mindestens 10 % der Durchgänge (1) der Winkel der Durchgänge (1) relativ zur Bremsscheibenfläche zwischen 20° und 87° beträgt, und zumindest ein Anteil von 10 %, bevorzugt die überwiegende Anzahl dieser Durchgänge durch die Querrippen verlaufen und somit die Zahl der durch die Lüftungskanäle laufenden Durchgänge verringert wird.

Gegenstand der vorliegenden Erfindung ist daher eine innenbelüftete Bremsscheibe aus faserverstärkten keramischen Verbundwerkstoffen mit Lüftungskanälen im Inneren der Bremsscheibe und Durchgängen, wobei die Bremsscheibe zwei durch Querrippen miteinander verbundene Scheiben umfaßt, dadurch gekennzeichnet, daß mindestens 10 % der Durchgänge vollständig im Inneren der Querrippen verlaufen und bei mindestens 10 % der Durchgänge der Winkel der Durchgänge relativ zur Bremsscheibenfläche zwischen 20° und 87° beträgt.

Ein Durchgang wird als "vollständig im Inneren einer Querrippe verlaufend" bezeichnet, wenn der Querschnitt des Durchgangs vollständig im Inneren des Querschnitts der Querrippe verläuft, oder, mit anderen Worten, wenn der Durchgang nicht und auch nicht teilweise innerhalb eines von den Querrippen und den beiden Halbscheiben gebildeten Lüftungskanals verläuft.

Als überwiegender Anteil wird hier ein Anteil von mindestens 51 % aller Durchgänge bezeichnet, die durch beide Deckflächen der Bremsscheibe hindurchtreten.

Besonders bevorzugt ist eine Konstruktion, bei der sämtliche Durchgänge vollständig im Inneren der Querrippen verlaufen.

Bevorzugt werden die Spannungen durch Fliehkraftbelastung reduziert, indem an den Durchgänge durch die Querrippen über die Rippen eine Wandstärkenerhöhung ausgebildet wird.

Im Vergleich zu einer Anordnung ohne Durchgänge führt die Anordnung der Durchgänge durch das Innere der Querrippen überraschenderweise zu einer geringeren Festigkeitseinbuße als die vergleichbare Anordnung mit gleicher Anzahl von Durchgängen durch den Bereich der Lüftungskanäle, unabhängig davon, ob sich diese Durchgänge in unmittelbarer Nähe der Rippen, oder in der Mitte der Lüftungskanäle befinden. Diese Einflüsse wurden durch Berstversuche an Scheiben ermittelt. Dies war überraschend, da bei ansonsten gleicher Geometrie der Scheibe ein Durchgang durch eine Rippe bei gleichem Durchmesser einen größeren Hohlraum bewirkt als ein Durchgang an einer Stelle, in der die als Lüftungskanäle wirkenden Hohlräume in der Mitte zwischen den beiden Halbscheiben der Scheibe sind.

Obwohl als faserverstärkte Keramik die C/SiC-Werkstoffe, wie beispielsweise in DE-C 197 11 829 und DE-A 197 10 105 beschrieben, besonders bevorzugt sind, können die erfindungsgemäßen Bremsscheiben auch aus anderen faserverstärkten keramischen Verbundwerkstoffen gefertigt werden.

Es ist weiter bevorzugt, daß die überwiegende Anzahl der Durchgänge in einem Winkel von weniger als 90° zur Deckfläche der Bremsscheibe, also in einem von 0° abweichenden Winkel zur Normalen der Oberfläche der Scheibe, verläuft.

Die Erfindung betrifft auch ein Verfahren zur Herstellung derartiger innenbelüfteter Bremsscheiben aus faserverstärkter Keramik, wobei die Durchgänge durch Bearbeiten des Grünkörpers oder durch Einbringen von verlorenen Kernen in den Grünkörper jeweils an den vorgesehenen Stellen realisiert werden können.

Die erfindungsgemäße keramikgerechte Konstruktion bezieht sich bevorzugt auf mit Kohlenstoffasern verstärkte Keramiken, insbesondere faserverstärktes SiC, C/SiC und Faserbündel-verstärktes C/SiC. Das prinzipielle Verfahren der Herstellung von Bremsscheiben aus C/SiC folgt hierbei bekannten Verfahren, wie beispielsweise in DE-C 44 38 455 beschrieben.

Das beschriebene Verfahren umfaßt hier im wesentlichen die folgenden Schritte:
- Fertigung von kohlenstoffhaltigen faserverstärkten Formkörpern (bevorzugt C/C-Formkörpern) in Form von Halbscheiben mit Halbrippen
- die Verklebung der gefertigten Halbscheiben unter Ausbildung der die Lüftungskanäle begrenzenden Querrippen
- die Silicium-Schmelzinfiltration mit Reaktion zur Ausbildung einer dichten SiC- und Si-haltigen Matrix
oder
- die Einbringung der zur Innenbelüftung vorgesehenen Hohlräume (Lüftungskanäle) in eine faserverstärkte kohlenstoffhaltige Scheibe, insbesondere eine C/C-Scheibe, beispielsweise durch die Verwendung von Kernen (Pressformgebung), und/oder durch Bohren und/oder Fräsen aus dem Vollen, und
- gegebenenfalls die Entfernung der Kernmaterialien und schließlich
- Siliciumschmelzinfiltration mit Reaktion zur Ausbildung einer dichten SiC- und Si-haltigen Matrix.

Erfindungsgemäß besonders bevorzugt ist die Herstellung von kurzfaserbündelverstärktem C/C, aus mit einer carbonisierbaren Substanz und/oder mit Kohlenstoff beschichteten Kohlenstoff-Fasern oder Faserbündeln und Füllstoffen und Bindern, der mit einem Kern zur gewünschten Form gepreßt wird und nach der Carbonisierung und/oder Graphitierung und Entfernung des Kerns im Vakuum mit einer Siliciumschmelze infiltriert wird.

Die Durchgänge werden bei beiden Varianten üblicherweise in den kohlenstoffhaltigen faserverstärkten Formkörper vor der Silicierung gebohrt bzw. eingebracht. Ebenso ist es aber auch möglich, nicht erst in dieser Stufe zu bohren, sondern zur Bildung der Bohrungen ebenso wie für die Bildung der Hohlräume bzw. Lüftungskanäle zur Belüftung verlorene Kerne bereits vorher beim Pressen des Vorkörpers (aus faserverstärkten Kohlenstoff-Vorläufern) einzusetzen, die vor der Silicierung wieder entfernt werden.

Das erfindungsgemäße Verfahren zur Herstellung der innenbelüfteten Bremsscheiben ist gleichwohl nicht auf die durch Silicierung von Kohlenstoff-Vorkörpern (C/C) herstellbaren Scheiben beschränkt, sondern läßt sich bei allen gängigen Verfahren zu Herstellung faserverstärkter Keramiken anwenden. Bevorzugt sind hierbei jedoch diejenigen Verfahren, bei denen den Endabmessungen nahe faserverstärkte Vorkörper mit niedriger Festigkeit oder Härte als Zwischenprodukte eingesetzt werden, denn in diesem Zustand lassen sich die Bohrungen verfahrenstechnisch einfach einbringen. Häufig werden diese Vorkörper dann in einem der nachfolgenden Verfahrensschritte durch eine Flüssiginfiltration verdichtet und die gewünschte Matrix durch Infiltration und/oder chemische Reaktion aufgebaut.

Bei Verwendung geeigneter Bohrer, insbesondere Diamantbohrer, und/oder dem Einsatz von laserunterstütztem Bohren kann es aber auch vorteilhaft sein, erst nach der Silicierung oder Keramisierung die Durchgänge zu fertigen. Auf diese Weise lassen sich auch kleinste Änderungen der Geometrie der Durchgänge, die während des Silicierungschrittes auftreten können, vermeiden.

Die Zahl und geometrische Ausgestaltung der Querrippen ist unter anderem abhängig von der Größe der Scheibe und dem erwünschten Kühleffekt der Innenbelüftung. Faserverstärkte Keramik-Bremsscheiben für Kraftfahrzeuge weisen üblicherweise mehr als 4 Querrippen auf, bevorzugt 6 bis 30 und besonders bevorzugt 8 bis 26 Rippen. Ist nur eine geringe Kühlung notwendig, beziehungsweise eine hohe Wärmekapazität der Scheibe erwünscht, können die Rippen mitunter sehr breit ausfallen. Üblicherweise ist die von Rippen bedeckte Fläche der Scheibe kleiner als 90 %, bevorzugt weniger als 75 % und besonders bevorzugt weniger als 50 %. Entsprechend beträgt die Fläche (Querschnittsfläche) der Lüftungskanäle oder Hohlräume im Inneren der Scheibe zusammengenommen mindestens 10 %, bevorzugt mindestens 25 %, und besonders bevorzugt mindestens 50 % der Fläche der Scheibe. Unter der Fläche der Scheibe wird hier diejenige Fläche verstanden, die zum reibenden Eingriff tatsächlich zur Verfügung steht. Im allgemeinen wird die Scheibe in Form einer Ringscheibe ausgeführt, wobei sich im achsennahen Bereich Vorrichtungen zur Befestigung an der Drehachse befinden. Die Fläche ist dann die Fläche der Ringscheibe. Die Breite (oder Quermaß, in der Ebene parallel zur Deckfläche der Bremsscheibe) der Rippen liegt üblicherweise bei mindestens 0,5 cm, bevorzugt im Bereich von 0,8 bis 3 cm.

Der mögliche Verlauf der Rippen ist nicht auf eine streng radiale Ausrichtung beschränkt, sondern umfaßt insbesondere auch tangentiale Anteile und gekrümmte Rippen. Besonders bevorzugt sind Rippen, die zu evolventenförmiger Ausrichtung der Lüftungskanäle führen.

Üblicherweise weisen die Durchgänge eine runde Form auf und sind in Umfangsrichtung nahezu mittig in den Rippen zentriert. Dabei ist es besonders vorteilhaft, wenn der Durchmesser der Durchgänge höchstens 90 % der Breite der Rippe im Bereich des Durchgangs ist. Bevorzugt liegt der Durchmesser bei höchstens 80 % und besonders bevorzugt bei höchstens 70 %.

Unter Umständen kann es vorteilhaft sein, längliche (schlitzförmige) oder elliptische Durchgänge zu verwenden. Dies ist besonders dann der Fall, wenn die Rippen oder Stege selbst nicht radial verlaufen, sondern gekrümmt sind, insbesondere evolventenförmig verlaufen. Üblicherweise liegt dann die maximale Breite der Durchgänge bei höchstens 90 % der Steg- oder Rippenbreite in diesem Bereich, bevorzugt höchstens 80 % und besonders bevorzugt höchstens 50 %.

Mindestens ein Anteil von 10 % der Durchgänge verläuft nicht senkrecht zur Bremsscheibenfläche, sondern schräg, d. i. in einem von 0° verschiedenen Winkel zur Normalen der Bremsscheibenfläche. Hierdurch wird unter anderem erreicht, daß der Bremsbelag nicht beidseitig gleichzeitig über die Durchgänge streicht. Daher wird der Durchgang beim Bremsvorgang erst von einer Seite geschlossen, bevor die gegenüberliegende Seite ebenfalls vom Bremsbelag verschlossen wird. Hierdurch kann sich bei der Rotation der Scheibe eine Luft-Strömung durch den Durchgang ausbilden, die zu einem zusätzlichen Kühleffekt führt. Auch dem Zusetzen der Durchgänge mit Abrieb oder anderen Verunreinigungen wird entgegenwirkt. Der Winkel relativ zur Bremsscheibenfläche liegt unterhalb von 90°, üblicherweise im Bereich zwischen 20 und 87° und besonders bevorzugt bei weniger als 83° (d. i. mehr als 0°, üblicherweise 3 bis 70° zur Normalen, besonders bevorzugt mehr als 7°). Es ist nicht notwendig, alle Durchgänge schräg auszuführen. Es reicht vielmehr aus, mindestens 10 % der Durchgänge schräg auszuführen, wobei die Achse des Durchgangs bevorzugt in der Tangentialebene des an dieser Stelle gedachten Zylindermantels liegt.

In einer weiteren Ausgestaltung der Erfindung verlaufen die Rippen nicht senkrecht zur Bremsscheibenebene, sondern schräg. Dies ist insbesondere dann der Fall, wenn schräge Durchgänge vorliegen. Durch die Schräglage der Rippen (d. i. gegenüber der Normalen auf der Bremsscheibenoberfläche geneigte Wände der Rippen) wird die Luftzirkulation im Bremsscheibenbetrieb weiter erhöht und im Falle der schrägen Durchgänge verhindert, daß die Durchgänge die Rippen schneiden. Der Winkel der Rippen relativ zur Bremsscheibenfläche liegt dabei unter 90°, üblicherweise im Bereich zwischen 20 und 87° und besonders bevorzugt bei weniger als 83° (d. i. der Winkel zwischen der seitlichen Begrenzungswand der Rippen und der Normalen auf der Oberfläche der Bremsscheibe ist mehr als 0°, üblicherweise 3 bis 70°, besonders bevorzugt mehr als 7°). Dabei ist es nicht notwendig, alle Rippen schräg, oder mit dem gleichen Winkel auszuführen. Beispielsweise ist es bevorzugt, nur jede zweite Rippe derart schräg auszuführen.

Die erfindungsgemäßen Bremsscheiben lassen sich insbesondere in Straßenfahrzeugen und Schienenfahrzeugen verwenden. Im allgemeinen liegt für KFZ-Bremsscheiben die Anzahl der Durchgänge bei mindestens 2 Durchgängen pro Steg, bevorzugt zwischen 3 bis 12 und besonders bevorzugt zwischen 4 und 10. Für LKW- oder Schienenfahrzeug-Bremsscheiben mit großem Außendurchmesser kann die Anzahl auch 12 übersteigen.

In einer weiteren Ausgestaltung der Erfindung bilden die Durchgänge zur Grenzfläche zwischen Rippen und Lüftungskanälen parallel verlaufende Schlitze. Die Breite der Schlitze ist derjenigen der länglichen Durchgänge analog, die Länge aller auf einer Rippe untergebrachten Schlitze kann hierbei bis zu 80 % der Rippenlänge betragen. Bevorzugt liegt die Länge unterhalb von 80 % und besonders bevorzugt bei höchstens 50 %. Erfindungsgemäß ist es nicht notwendig, daß sich alle Durchgänge ausschließlich innerhalb der Rippen befinden. Hinsichtlich der Festigkeitssteigerung der Bremsscheibe ist es nur notwendig, daß sich mindestens 10 % der Durchgänge innerhalb der Rippen befindet, vorzugsweise die Durchgänge, die in der Achsennähe der Bremsscheibe liegen. In bevorzugter Weise befindet sich die überwiegende Anzahl der Durchgänge innerhalb der Rippen.

In einer weiteren bevorzugten Ausführungsform betrifft die Erfindung schließlich eine Scheibe, bei der die Innenbelüftung im wesentlichen oder ausschließlich über die schrägen Durchgänge erfolgt. Dabei weist die Bremsscheibe in dieser Ausführungsform nur wenige oder gar keine durch Querrippen begrenzte Lüftungskanäle mehr auf. Im letzteren Fall beträgt die Zahl der Querrippen folglich Null. Durch die Reduzierung der Anzahl der Lüftungskanäle bzw. den Verzicht auf die Lüftungskanäle in äquatorialer Ebene kann eine erhebliche Steigerung der Bremsscheibenfestigkeit erreicht werden. Typischerweise enthält eine solche Scheibe dann keine Querrippen mehr, bevorzugt weniger als 6 Querrippen, und in einer anderen bevorzugten Ausführungsform mindestens 2 Querrippen. Die Durchgänge sind dann im allgemeinen auf den Bereich außerhalb der Lüftungskanäle beschränkt.

Einige der genannten Ausführungsbeispiele der Erfindung werden anhand der folgenden Zeichnungen näher beschrieben.

Es zeigen
- Fig. 1: einen Teil der Bremsscheibe im Schnitt parallel zur Deckfläche mit 5 Rippen und 4 zwischen diesen eingeschlossenen Lüftungskanälen
- Fig. 2: eine Rippe im Querschnitt, d. i. parallel zur Achse der Scheibe, mit Durchgang
- Fig. 3: eine räumliche Darstellung eines Teiles einer parallel zur Deckfläche aufgeschnitten Scheibe, mit Lüftungs- oder Kühlkanälen und außerhalb der Rippen liegenden Durchgängen, die parallel zur Drehachse der Scheibe verlaufen
- Fig. 4: eine räumliche Darstellung eines Teiles einer parallel zur Deckfläche aufgeschnitten Scheibe, mit Lüftungs- oder Kühlkanälen und teilweise innerhalb und teilweise außerhalb der Rippen liegenden Durchgängen, die parallel zur Drehachse der Scheibe verlaufen
- Fig. 5: eine räumliche Darstellung eines Teiles einer parallel zur Deckfläche aufgeschnitten Scheibe, mit Lüftungs- oder Kühlkanälen und ausnahmslos innerhalb der Rippen liegenden Durchgängen, die parallel zur Drehachse der Scheibe verlaufen, und
- Fig. 6: einen Querschnitt der Bremsscheibe senkrecht zur Deckfläche mit schrägen Durchgängen und schrägen Lüftungskanälen.

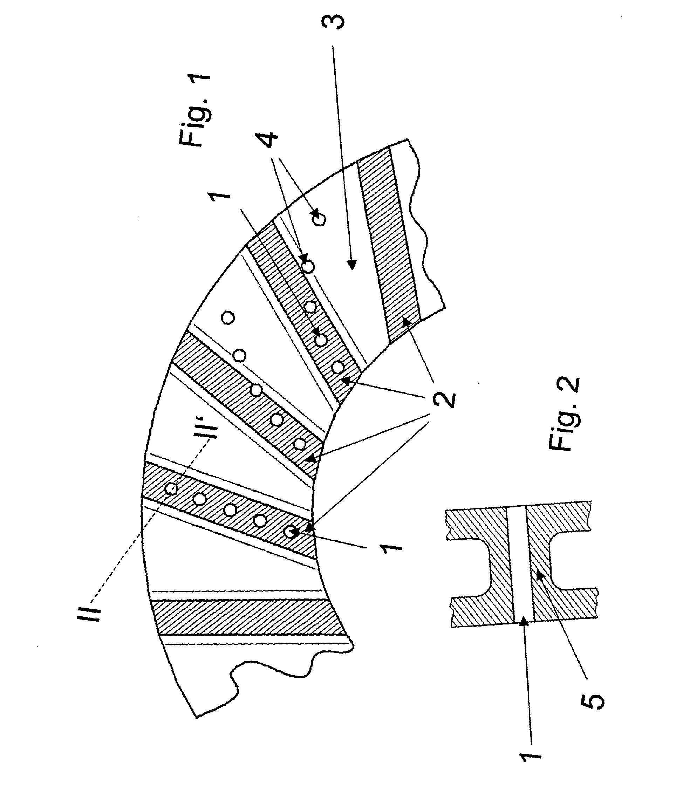

In Fig. 1 ist eine Draufsicht auf einen Teil einer in der Mitte parallel zur Deckfläche aufgeschnittenen Bremsscheibe dargestellt, in der fünf gegenüber dem Radius geneigte, ansonsten geradlinig und parallel begrenzte Querrippen **2** vier als Lüftungskanäle wirkende Hohlräume **3** umschließen. Der Fuß der Querrippen **2**, der auf die untere Deckfläche der Bremsscheibe aufsetzt, ist verrundet. Die Fig. 1 zeigt zwei verschiedene Ausführungsformen: einmal befinden sich sämtliche Durchgänge **1** innerhalb der Querrippe **2** (in der Zeichnung die im Uhrzeigersinne zweite dargestellte Querrippe); in der anderen Ausführungsform (im Uhrzeigersinn dritte und vierte dargestellte Querrippe) ist ein Teil der Durchgänge **1** innerhalb der Querrippen, und zwei der dargestellten Durchgänge sind außerhalb der Querrippen in dem Bereich des als Lüftungskanal wirkenden Hohlraums **3**, wobei in der im Uhrzeigersinn dritten Querrippe ein Durchgang **1** teilweise im Bereich der Querrippe ist.

Fig. 2 zeigt einen Teil eines Querschnitts längs der Linie II - II' durch die in Fig. 1 dargestellte aufgeschnittene Bremsscheibe, wobei der Durchgang **1** durch den durch die Querrippe gebildeten Steg **5** zwischen den beiden Deckflächen der Bremsscheibe verläuft. Der Steg **5** wird durch die Querrippen zweier gegenüberliegender Halbscheiben gebildet.

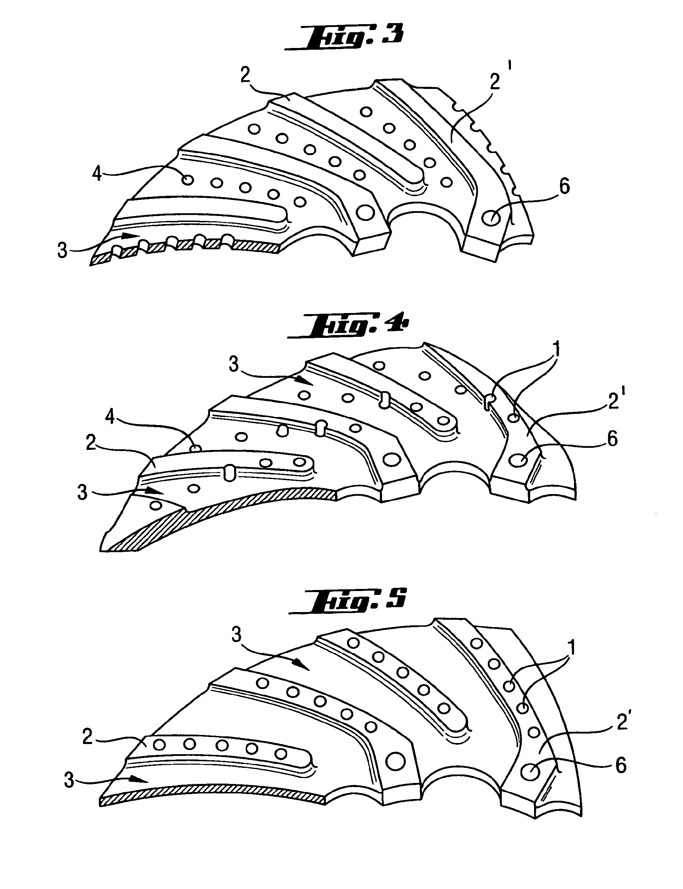

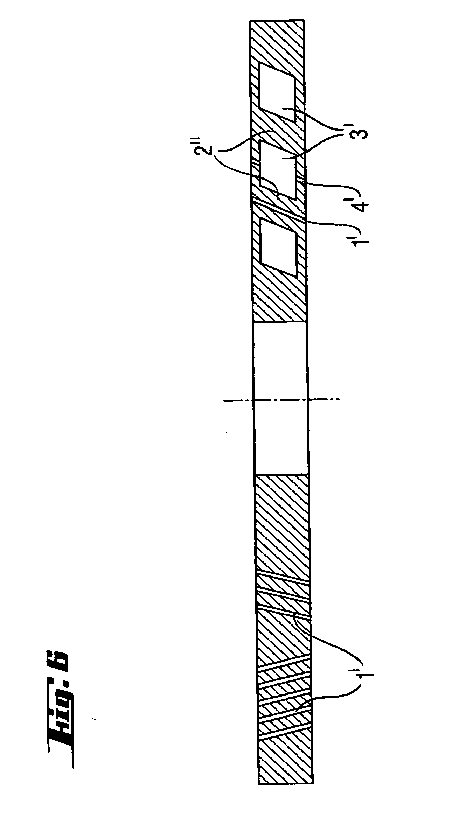

Fig. 3 zeigt eine räumliche Darstellung eines Teiles einer parallel zur Deckfläche aufgeschnitten Scheibe, mit Lüftungs- oder Kühlkanälen **3** und außerhalb der Rippen **2** bzw. **2'** liegenden Durchgängen **4**, die parallel zur Drehachse der Scheibe verlaufen. In dieser Ausführungsform sind, ebenso wie in den in Fig. 4 und 5 dargestellten Scheibenteilen, unterschiedlich ausgeführte Rippen vorhanden: solche Rippen **2**, die nicht bis zum inneren (achsennahen) Rand der Ringscheibe verlaufen, sondern verkürzt sind, und solche Rippen **2'**, die an der der Drehachse zugewandten Seite Befestigungslöcher **6** aufweisen, die zur Fixierung an der Achse dienen.

Fig. 4 zeigt eine räumliche Darstellung eines Teiles einer parallel zur Deckfläche aufgeschnitten Scheibe, mit Lüftungs- oder Kühlkanälen **3** und Durchgängen **1** bzw. **4**, die parallel zur Drehachse der Scheibe verlaufen und die sich teilweise innerhalb (**1**) und teilweise außerhalb (**4**) der Rippen **2** bzw. **2'** befinden.

Fig. 5 zeigt eine räumliche Darstellung eines Teiles einer parallel zur Deckfläche aufgeschnitten Scheibe, mit Lüftungs- oder Kühlkanälen **3** und ausnahmslos innerhalb der Rippen **2** bzw. **2'** liegenden Durchgängen **1**, die parallel zur Drehachse der Scheibe verlaufen.

Fig. 6 schließlich zeigt einen Querschnitt durch das Zentrum der Bremsscheibe senkrecht zur Bremsscheibenebene, auf der rechten Hälfte der Zeichnung ist eine Ausführungsform mit schrägen Durchgängen (**1'**) durch Querrippen (**2"**) mit gegenüber der Achse geneigten ("schrägen") inneren Begrenzungsflächen dargestellt, die schräge Lüftungskanäle (**3'**) umschließen und schräge Durchgänge (**4'**), die durch die Lüftungskanäle (**3'**) verlaufen. Auf der linken Hälfte der Zeichnung ist eine Ausführungsform dargestellt mit schrägen Durchgängen (**1'**) ohne weitere Lüftungskanäle.

Bei gleicher Zahl und (Querschnitts-)Fläche der Durchgänge hat sich in unerwarteter Weise in Berstversuchen ergeben, daß eine Scheibe gemäß der Fig. 5 die höchste Stabilität aufweist, gefolgt von einer Scheibe gemäß Fig. 4. Die geringste Stabilität hatte eine Scheibe gemäß der in Fig. 3 dargestellten Ausführungsform, obwohl hier der Verlust an Masse durch die Durchgänge am geringsten ist.

### Beispiele

Um den Einfluß der Lage der Durchgänge experimentell zu bestimmen, wurden vier innenbelüftete Bremsscheiben mit einem Außendurchmesser von 350 mm aus C/SiC nach dem gleichen Fertigungsverfahren mit der gleichen Anzahl an senkrechten Durchgangsbohrungen, aber unterschiedlicher Anordnung gemäß den Fig. 3, 4 und 5 angefertigt und die Festigkeit anhand der Berstdrehzahl an einem Berstprüfstand gemessen. Diese Modellscheiben wurden nicht mit Reibschichten versehen. Zur Herstellung der Scheiben wurden zunächst pressfähige Massen aus beschichteten und graphitierten Kohlenstoff-Kurzfaserbündeln, Füllstoffen, Harzen und Pechen hergestellt und zu Halbscheiben gepreßt. Die Halbscheiben wurden carbonisiert und je zwei Halbscheiben zu einer Vollscheibe verklebt. Hierauf erfolgte die Bohrung der Durchgangsbohrungen (jeweils 5 Löcher gleichen Durchmessers pro Querrippe bzw. Lüftungskanal), wobei eine Scheibe ohne Bohrungen belassen wurde. Danach wurden die Scheiben im Vakuum bei 1500 bis 1800 °C mit flüssigem Silicium siliciert, wodurch die Matrix im wesentlichen in Si, SiC und (unreagierten) Restkohlenstoff überführt wurde.

Die folgende Tabelle zeigt die ermittelten Berstdrehzahlen relativ zu der in Fig. 3 gezeigten Bremsscheibe, gemeinsam mit der Berstdrehzahl einer Referenzscheibe, die den in den Fig. 3 bis 5 dargestellten Scheiben entspricht, jedoch keine Bohrungen aufweist.

**Tabelle: Berstdrehzahlen von Bremsscheiben mit unterschiedlicher Anordung der Durchgänge**

| Bremsscheibentyp gemäß Abbildung | relative Berstdrehzahl |
|---|---|
| Fig. 3 | 100 % |
| Fig. 4 | 108 % |
| Fig. 5 | 110 % |
| Referenzscheibe | 110 % |

Hieraus ist ersichtlich, daß durch die Verlagerung der Durchgänge aus den Lüftungskanälen in die Stege eine deutliche Erhöhung der Scheibenfestigkeit gegenüber rotierender Belastung zu erreichen ist. Einbringen von Durchgängen in den Bereich der Stege führt nicht zu einem Festigkeitsverlust gegenüber einer sonst gleichartigen Scheibe ohne Durchgänge, ermöglicht jedoch gegenüber einer entsprechenden Scheibe ohne Durchgänge eine erheblich bessere Wärmeabfuhr.

### Bezugszeichenliste:

- 1,1': Durchgänge in den Querrippen
- 2: Querrippe oder Steg
- 2': Querrippe oder Steg mit Befestigungsloch
- 3: Lüftungskanal
- 3': Lüftungskanal mit gegenüber der Drehachse der Scheibe geneigten Begrenzungsflächen
- 4,4': Durchgänge im Bereich der Lüftungskanäle
- 5: Steg, der durch Querrippen zweier gegenüberliegender Halbscheiben gebildet wird
- 6: Befestigungsloch zur Fixierung an der Achse

## Patentansprüche

1. Innenbelüftete Bremsscheibe aus faserverstärkten keramischen Verbundwerkstoffen mit Lüftungskanälen (3) im Inneren der Bremsscheibe und Durchgängen (1), wobei die Bremsscheibe zwei durch Querrippen (2) miteinander verbundene Scheiben umfaßt, wobei mindestens 10 % der Durchgänge (1), die durch beide Deckflächen der Bremsscheibe hindurchtreten, vollständig im Inneren der Querrippen verlaufen, die die Lüftungskanäle (3) voneinander trennen, **dadurch gekennzeichnet daß** bei mindenstens 10 % der Durchgänge (1) der Winkel der Durchgänge (1) relativ zur Bremsscheibenfläche zwischen 20° und 87° beträgt.

2. Innenbelüftete Bremsscheibe nach Anspruch 1, **dadurch gekennzeichnet, daß** die überwiegende Anzahl der Durchgänge (1) vollständig im Inneren der Querrippen (2) verläuft.

3. Innenbelüftete Bremsscheibe nach Anspruch 1, **dadurch gekennzeichnet, daß** sämtliche Durchgänge (1) vollständig im Inneren der Querrippen (2) verlaufen.

4. Innenbelüftete Bremsscheibe nach einem der Ansprüche 1 bis 3, **dadurch gekennzeichnet, daß** die überwiegende Anzahl der Durchgänge (1) in einem Winkel von weniger als 90° zu den Deckflächen der Bremsscheibe verläuft.

5. Innenbelüftete Bremsscheibe nach einem der vorhergehenden Ansprüche, **dadurch gekennzeichnet, daß** sie mehr als 4 Querrippen aufweist.

6. Innenbelüftete Bremsscheibe nach einem der vorhergehenden Ansprüche, **dadurch gekennzeichnet, daß** die von den Querrippen bedeckte Fläche der Scheibe 90 % oder weniger der Scheibenfläche beträgt.

7. Innenbelüftete Bremsscheibe nach einem der vorhergehenden Ansprüche, **dadurch gekennzeichnet, daß** die Breite der Querrippen mindestens 0,5 cm beträgt.

8. Innenbelüftete Bremsscheibe nach einem der vorhergehenden Ansprüche, **dadurch gekennzeichnet, daß** die Querrippen radial oder evolventenförmig verlaufen.

9. Innenbelüftete Bremsscheibe nach einem der vorhergehenden Ansprüche, **dadurch gekennzeichnet, daß** der Durchmesser eines Durchgangs höchstens 90 % der Breite der Querrippe im Bereich des Durchgangs ist.

10. Innenbelüftete Bremsscheibe nach einem der vorhergehenden Ansprüche, **dadurch gekennzeichnet, daß** die Durchgänge einen schlitzförmigen oder elliptischen Querschnitt aufweisen.

11. Innenbelüftete Bremsscheibe nach einem der vorhergehenden Ansprüche, **dadurch gekennzeichnet, daß** die Wände der Querrippen gegenüber der Richtung der. Normalen auf der Bremsscheibenoberfläche geneigt sind.

12. Innenbelüftete Bremsscheibe nach Anspruch 11, **dadurch gekennzeichnet, daß** der Winkel zwischen den Wänden der Querrippen und der Normalen auf der Bremsscheibenoberfläche 3 bis 70 ° beträgt.

13. Innenbelüftete Bremsscheibe nach einem der vorhergehenden Ansprüche, **dadurch gekennzeichnet, daß** die Durchgänge zur Grenzfläche zwischen den Querrippen und den Lüftungskanälen parallel verlaufende Schlitze bilden.

14. Innenbelüftete Bremsscheibe nach Anspruch 13, **dadurch gekennzeichnet, daß** die Summe der Längen aller auf einer Querrippe befindlichen Schlitze höchstens 80 % der Länge der Querrippe beträgt.

15. Verfahren zur Herstellung von Bremsscheiben gemäß Anspruch 1, **dadurch gekennzeichnet, daß** zwei faserverstärkte kohlenstoffhaltige Halbscheiben mit Halbrippen durch mechanisches Fügen oder Verkleben zu einer Bremsscheibe mit durch die gebildeten Querrippen (2, 2") begrenzten im Inneren liegenden Belüftungskanäle zusammengesetzt und anschließend durch die Flüssiginfiltration mit einer siliciumhaltigen Metallschmelze unter Bildung einer Si- und SiC-haltigen Matrix untrennbar verbunden werden, wobei die Bremsscheibe Durchgänge aufweist, die durch beide Deckflächen der Bremsscheibe hindurchtreten, und wobei ein Anteil von mindestens 10 % dieser Durchgänge vollständig im Inneren der Querrippen (2, 2") verläuft.

16. Verfahren zur Herstellung von Bremsscheiben gemäß Anspruch 1, **dadurch gekennzeichnet, daß** eine faserverstärkte kohlenstoffhaltige Vollscheibe durch Preßformgebung mit verlorenen Kernen, Bohren oder Fräsen mit Belüftungskanälen versehen wird und anschließend durch die Flüssiginfiltration mit einer siliciumhaltigen Metallschmelze eine Si- und SiC-haltige Matrix ausgebildet wird, wobei die Bremsscheibe Durchgänge aufweist, die durch beide Deckflächen der Bremsscheibe hindurchtreten, und wobei ein Anteil von mindestens 10 % dieser Durchgänge vollständig im Inneren von Querrippen (2, 2") verläuft.

17. Verfahren nach Anspruch 15 oder 16, **dadurch gekennzeichnet, daß** die Durchgänge vor dem Wärmebehandlungsschritt entweder vor dem Zusammensetzen der Halbscheiben in die Halbscheiben oder in die Vollscheibe eingebracht werden.

18. Verfahren nach Anspruch 15 oder 16, **dadurch gekennzeichnet, daß** die Durchgänge gebohrt werden, oder durch verlorene Kerne gebildet werden, die vor dem Wärmebehandlungsschritt aus den Halbscheiben oder der zusammengesetzten Bremsscheibe entfernt oder im Verlauf des Wärmebehandlungsschrittes zersetzt werden.

## Claims

1. An internally ventilated brake disk made from fiber-reinforced ceramic composite materials, having ventilation ducts (3) in the interior of the brake disk and passages (1), the brake disk comprising two disks which are connected to one another by transverse ribs (2), with at least 10 % of the passages (1) which extend through both cover faces of the brake disk running entirely in the interior of the transverse ribs which separate the ventilation ducts (3) from one another, wherein in the case of at least 10 % of the passages (1), the angle of the passages (1) relative to the brake disk face is between 20 ° and 87 °.

2. The internally ventilated brake disk as claimed in claim 1, wherein a predominant number of the passages (1) run entirely in the interior of the transverse ribs (2).

3. The internally ventilated brake disk as claimed in claim 1, wherein all the passages (1) run entirely in the interior of the transverse ribs (2).

4. The internally ventilated brake disk as claimed in one of claims 1 to 3, wherein a predominant number of the passages (1) run at an angle of less than 90 ° relative to the cover faces of the brake disk.

5. The internally ventilated brake disk as claimed in one of the preceding claims, which internally ventilated brake disk has more than 4 transverse ribs.

6. The internally ventilated brake disk as claimed in one of the preceding claims, wherein the area of the disk covered by the transverse ribs is 90 % or less of the disk area.

7. The internally ventilated brake disk as claimed in one of the preceding claims, wherein the width of the transverse ribs is at least 0.5 cm.

8. The internally ventilated brake disk as claimed in one of the preceding claims, wherein the transverse ribs run radially or in an involute fashion.

9. The internally ventilated brake disk as claimed in one of the preceding claims, wherein the diameter of a passage is at most 90 % of the width of the transverse rib in the region of the passage.

10. The internally ventilated brake disk as claimed in one of the preceding claims, wherein the passages have a slot-shaped or elliptical cross section.

11. The internally ventilated brake disk as claimed in one of the preceding claims, wherein the walls of the transverse ribs are inclined relative to the direction of the normal to the brake disk surface.

12. The internally ventilated brake disk as claimed in claim 11, wherein the angle between the walls of the transverse ribs and the normal to the brake disk surface is 3 ° to 70 °.

13. The internally ventilated brake disk as claimed in one of the preceding claims, wherein the passages form slots which run parallel to the interface between the transverse ribs and the ventilation ducts.

14. The internally ventilated brake disk as claimed in claim 13, wherein the sum of the lengths of all the slots situated on one transverse rib is at most 80 % of the length of the transverse rib.

15. A process for producing brake disks as claimed in claim 1, wherein two fiber-reinforced carbon-containing half-disks having half-ribs are assembled by means of mechanical joining or adhesion to form a brake disk having internally situated ventilation ducts which are delimited by the transverse ribs (2, 2") formed, and said two fiber-reinforced carbon-containing half-disks having half-ribs are subsequently inseparably connected by means of liquid infiltration with a silicon-containing metal melt so as to form a Si- and SiC-containing matrix, the brake disk having passages which extend through both cover faces of the brake disk, with a proportion of at least 10 % of said passages running entirely in the interior of the transverse ribs (2, 2").

16. A process for producing brake disks as claimed in claim 1, wherein a fiber-reinforced carbon-containing full disk is provided with ventilation ducts by means of press-forming with non-permanent cores, by means of boring or by means of milling, and a Si- and SiC-containing matrix is subsequently formed by means of liquid infiltration with a silicon-containing metal melt, the brake disk having passages which extend through both cover faces of the brake disk, with a proportion of at least 10 % of said passages running entirely in the interior of the transverse ribs (2, 2").

17. The process as claimed in claim 15 or claim 16, wherein the passages are formed either in the half-disks before they are assembled, or in the full disk, before the heat treatment step.

18. The process as claimed in claim 15 or claim 16, wherein the passages are bored or are formed by non-permanent cores which are removed from the half-disks or from the assembled brake disk before the heat treatment step or are decomposed in the course of the heat treatment step.

## Revendications

1. Disque de frein à ventilation interne en matériaux composites céramiques armés de fibres, comprenant de canaux de ventilation (3) aménagés à l'intérieur du disque de frein, et des passages (1), le disque de frein comprenant deux disques reliés l'un à l'autre par l'intermédiaire de nervures transversales (2), au moins 10 % des passages (1) qui débouchent dans les deux faces extérieures du disque de frein, s'étendant entièrement à l'intérieur des nervures transversales qui séparent les canaux de ventilation les uns des autres,
**caractérisé par le fait que** l'angle des passages (1) par rapport à la surface du disque de frein est compris entre 20° et 87° pour au moins 10 % des passages (1).

2. Disque de frein à ventilation interne selon la revendication 1, **caractérisé en ce que** pour la majorité d'entre eux, les passages (1) s'étendent entièrement à l'intérieur des nervures transversales (2).

3. Disque de frein à ventilation interne selon la revendication 1, **caractérisé en ce que** tous les passages (1) s'étendent entièrement à l'intérieur des nervures transversales (2).

4. Disque de frein à ventilation interne selon l'une des revendications 1 à 3, **caractérisé en ce que** pour la majorité d'entre eux, les passages (1) s'étendent à un angle de moins de 90° par rapport aux faces extérieures du disque de frein.

5. Disque de frein à ventilation interne selon l'une des revendications précédentes, **caractérisé en ce qu'**il comporte plus de 4 nervures transversales.

6. Disque de frein à ventilation interne selon l'une des revendications précédentes, **caractérisé en ce que** la surface du disque, qui est couverte par les nervures transversales, représente 90 % ou moins de la surface du disque.

7. Disque de frein à ventilation interne selon l'une des revendications précédentes, **caractérisé en ce que** la largeur des nervures transversales est d'au moins 0,5 cm.

8. Disque de frein à ventilation interne selon l'une des revendications précédentes, **caractérisé en ce que** les nervures s'étendent radialement ou en forme de développante.

9. Disque de frein à ventilation interne selon l'une des revendications précédentes, **caractérisé en ce que** le diamètre d'un passage ne présente pas plus de 90 % de la largeur de la nervure transversale au niveau du passage.

10. Disque de frein à ventilation interne selon l'une des revendications précédentes, **caractérisé en ce que** les passages présentent une section transversale en forme de fente ou en forme d'ellipse.

11. Disque de frein à ventilation interne selon l'une des revendications précédentes, **caractérisé en ce que** les parois des nervures transversales sont inclinées par rapport à la direction de la normale à la surface du disque de frein.

12. Disque de frein à ventilation interne selon l'une des revendications précédentes, **caractérisé en ce que** l'angle entre le parois des nervures transversales et la normale à la surface du disque de frein est compris entre 3 et 70°.

13. Disque de frein à ventilation interne selon l'une des revendications précédentes, **caractérisé en ce que** les passages forment des fentes s'étendant parallèlement à l'interface entre les nervures transversales et les canaux de ventilation.

14. Disque de frein à ventilation interne selon la revendication 13, **caractérisé en ce que** la somme des longueurs de toutes les fentes situées sur une nervure transversale ne représente pas plus de 80 % de la longueur de la nervure transversale.

15. Procédé de fabrication de disques de frein selon la revendication 1,
**caractérisé en ce que** deux demi-disques armés de fibres, contenant du carbone, pourvus de demi-nervures, sont assemblés par assemblage mécanique ou collage pour former un disque de frein comprenant des canaux de ventilation situés à l'intérieur du disque, délimités par les nervures transversales (2, 2") ainsi constituées, et sont ensuite reliés de façon irréversible l'un à l'autre par infiltration en phase liquide d'une fonte métallique contenant du silicium, en formant une matrice contenant du Si et du SiC, le disque de frein comportant des passages qui débouchent dans les deux faces extérieures du disque de frein, et une part d'au moins 10 % de ces passages s'étendant entièrement à l'intérieur des nervures transversales (2, 2").

16. Procédé de fabrication de disques de frein selon la revendication 1, **caractérisé en ce qu'**un disque de frein plein armé de fibres, contenant du carbone, est pourvu de canaux de ventilation par moulage sous pression à noyaux perdus, par perçage ou par fraisage, et qu'ensuite, une matrice contenant du Si et du SiC est formée par infiltration en phase liquide avec une fonte métallique contenant du silicium, le disque de frein comportant des passages qui débouchent dans les deux faces extérieures du disque, et une partie d'au moins 10 % de ces passages s'étendant entièrement à l'intérieur des nervures transversales (2, 2").

17. Procédé selon la revendication 15 ou 16, **caractérisé en ce que** les passages sont produits avant l'étape de traitement thermique, soit en étant façonnés dans les demi-disques avant l'assemblage des demi-disques, soit en étant aménagés dans le disque plein.

18. Procédé selon la revendication 15 ou 16, **caractérisé en ce que** les passages sont réalisés par perçage ou par utilisation de noyaux perdus, qui sont retirés des demi-disques ou du disque de frein assemblé, avant l'étape de traitement thermique, ou sont dissous pendant l'étape de traitement thermique.
